(19) Europäisches Patentamt
European Patent Office
Office européen des brevets

(11) Veröffentlichungsnummer: **0 057 358**
**B1**

(12) # EUROPÄISCHE PATENTSCHRIFT

(45) Veröffentlichungstag der Patentschrift: **12.10.83**

(51) Int. Cl.$^3$: **C 09 B 1/36,** C 09 B 3/10, C 09 B 5/00

(21) Anmeldenummer: **82100282.1**

(22) Anmeldetag: **16.01.82**

(54) **Verfahren zur Herstellung von Anthrachinonküpenfarbstoffen.**

(30) Priorität: **31.01.81 DE 3103251**

(43) Veröffentlichungstag der Anmeldung: **11.08.82 Patentblatt 82/32**

(45) Bekanntmachung des Hinweises auf die Patenterteilung: **12.10.83 Patentblatt 83/41**

(84) Benannte Vertragsstaaten: **CH DE FR GB IT LI**

(56) Entgegenhaltungen: **CH-A-292 691**
**GB-A-14 476**

(73) Patentinhaber: **BAYER AG, Zentralbereich Patente, Marken und Lizenzen, D-5090 Leverkusen 1, Bayerwerk (DE)**

(72) Erfinder: **Hohmann, Walter, Dr., Fontanestrasse 17, D-5090 Leverkusen 1 (DE)**
Erfinder: **Wunderlich, Klaus, Dr., Carl-Rumpff-Strasse 21, D-5090 Leverkusen 1 (DE)**
Erfinder: **Dittmer, Helmut, Dr., Zedernweg 6, D-5090 Leverkusen 31 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

Europa-Patent Text Verfahren zur Herstellung von Anthrachinonküpenfarbstoffen

Die Erfindung betrifft ein Verfahren zur Herstellung von Anthrachinonküpenfarbstoffen, das dadurch gekennzeichnet ist, dass man gegebenenfalls substituierte Aminoanthrachinone oder davon abgeleitete aminogruppenhaltige Verbindungen mit Acylierungsmitteln, die eine oder mehrere acylierende Gruppen enthalten, in Gegenwart von 10 Gew.-%, bezogen auf den gebildeten Anthrachinonküpenfarbstoff, bis zu einer solchen Menge eines oder mehrerer oberhalb 100°C siedender Lösungsmittel, dass das Gemisch in üblichen Rührapparaten noch nicht rührbar wird oder während der Reaktion nicht rührbar bleibt, bei erhöhter Temperatur umsetzt. Vorzugsweise arbeitet man in Gegenwart von 10 bis zu etwa 100 Gew.-%, bezogen auf den gebildeten Anthrachinonküpenfarbstoff, besonders bevorzugt in Gegenwart von etwa 25 bis etwa 75 Gew.-% an Lösungsmittel.

Als Acylierungsmittel können Carbonsäurederivate wie Anhydride, Ester, vor allem aber Carbonsäurehalogenide, vorzugsweise Chloride oder heterocyclische Verbindungen mit aktivierten Halogenatomen, vorzugsweise Fluor- und Chloratomen, eingesetzt werden. Bevorzugt sind dabei polyfunktionelle Acylierungsmittel nichtanthrachinoider Art wie Derivate, insbesondere Chloride aliphatischer Di- und Tricarbonsäuren mit 2 bis 16 C-Atomen oder aromatischer Di- und Tricarbonsäuren wie Oxalsäure, Malonsäure, Benzoldicarbonsäuren, insbesondere Terephthalsäure und Isophthalsäure, Diphenyldicarbonsäuren, insbesondere Diphenyldicarbonsäure-4,4', Naphthalindicarbonsäuren, Diphenyloxiddicarbonsäuren, Diphenylsulfiddicarbonsäuren, Benzoltricarbonsäuren, insbesondere Benzoltricarbonsäure-1,3,5 und weiterhin Pyrimidin-, Chinoxalin- und Triazinderivate mit aktivierten Halogenatomen, vorzugsweise Fluor- oder Chloratomen eingesetzt. Bei Acylierungsmitteln anthrachinoider Art kann es sich sowohl um solche mit einer oder mehreren Acylierungsfunktionen handeln, z.B. Anthrachinon-mono- und -dicarbonsäure, Benzanthron-mono- und -dicarbonsäuren, Anthrapyrimidincarbonsäuren.

Besonders bevorzugte Verwendung finden Cyanurchlorid sowie in 2-Stellung substituiertes 4,6-Dichlortriazin-1,3,5 wie 2-Alkyl-, insbesondere 2-($C_1$-$C_4$-Alkyl)-, 2-Alkoxy-, insbesondere 2-($C_1$-$C_4$-Alkoxy)-, 2-Alkylthio-, insbesondere 2-($C_1$-$C_4$-Alkyl)-thio-, 2-Phenoxy-, 2-Phenylthio-, 2-Amino-, 2-Alkylamino-, 2-Arylamino- und 2-Phenyl-4,6-dichlortriazin-1,3,5. Auch in 2- oder 2,4-Stellung durch einen oder zwei Anthrachinonylamino-, Phthaloylacridonylamino-, Anthrapyrimidinylamino-, Benzanthronylamino-Rest substituiertes 4,6-Dichlor- oder 6-Chlor-triazin-1,3,5, wobei diese Reste beispielsweise durch Chlor, Brom, Acetyl, Benzoyl substituiert sein können, können eingesetzt werden.

Gegebenenfalls substituierte Aminoanthrachinone bzw. davon abgeleitete aminogruppenhaltige Verbindungen sind vorzugsweise 1- und 2-Aminoanthrachinone, die z.B. durch Halogen, vorzugsweise Chlor und Brom, Acylamino, vorzugsweise Acetylamino und Benzoylamino, die ihrerseits wieder substituiert sein können, Alkoxy- vorzugsweise Methoxy-substituiert sein können; ferner Aminoanthrachinone, an die ein vorzugsweise 5- oder 6-gliedriger carbo- oder heterocyclischer Ring mit vorzugsweise 2 Heteroatomen aus der Reihe O, N, S anelliert ein kann, wobei die anellierten Ringe ihrerseits wieder substituiert oder anelliert sein können. Beispielhaft seien genannt: Amino-3,4-phthaloyl-acridone, vorzugsweise 2-Amino-3,4-phthaloylacridone, die durch Halogen, vorzugsweise Chlor oder Brom, substituiert sein kann sowie 6- oder 8-Aminoanthrapyrimidin oder Aminobenzanthron.

Die erfindungsgemässe Herstellung von Anthrachinonküpenfarbstoffen kann auch dadurch erfolgen, dass man das Acylierungsmittel stufenweise, in einem Eintopfverfahren oder als echte Mischumsetzung mit verschiedenen, gegebenenfalls substituierten Anthrachinonen und/oder davon abgeleiteten aminogruppenhaltigen Verbindungen, umsetzt.

Die bei der Umsetzung anwesenden, hochsiedenden Lösungsmittel sind vorzugsweise solche, die oberhalb 100°C, besonders bevorzugt oberhalb 140°C sieden, und die unter den Reaktionsbedingungen nicht an der Acylierung teilhaben. Beispielsweise seien genannt: Gegebenenfalls substituierte Kohlenwasserstoffe wie Chlorbenzole, Nitrobenzole, Naphthalin, Chlornaphthaline; saure Lösungsmittel wie aromatische Hydroxyverbindungen, vorzugsweise Phenole; alkalisch reagierende Lösungsmittel wie tertiäre aliphatische oder aromatische Basen wie Triethanolamin oder Pyridin. Besonders bevorzugte Verwendung finden Nitrobenzol und Phenol. Für die Herstellung der wichtigen Trianthrachinonylaminotriazine kommen ganz besonders bevorzugt aromatische Hydroxyverbindungen, speziell das wohlfeile Phenol, zum Einsatz. Vorzugsweise sollte beim Austausch des 1. und 2. Chloratoms im Cyanurchlorid eine Temperatur von etwa 110°C, beim Austausch des 3. Chloratoms eine solche von etwa 140°C bis etwa 150°C nicht überschritten werden, da sonst neben der gewünschten Reaktion auch Chlorsubstitution durch Phenoxygruppen erfolgen kann.

Geeignete Apparate zur Durchführung des erfindungsgemässen Verfahrens sind z.B. gekennzeichnet durch eine geschlossene Bauform, grosse spezifische Heizflächen und intensive Misch- und/oder Knetbewegung der Rührelemente; die Zerkleinerung von Knollen und Krusten muss entweder durch Scher- oder Schlagkräfte erfolgen. Es handelt sich dabei um Apparate, die allgemein für die thermische Prozessführung von Produkten rieselfähiger, pastöser, flüssiger und krustender Konsistenz und Produkten mit zeitlicher Folge dieser Eigenschaften einsetzbar sind. Folgende Apparatetypen erfüllen diese Voraussetzungen: Schaufeltrockner (mit Schlagstangen), schnellaufender Schaufeltrockner (mit Messerköpfen), Zwei- und Mehrwellenschneckenmaschinen, Allphasentrocknerreaktoren (Discotherm der Fa. List, Pratteln, Schweiz; AP-Reaktor der Fa. List, Pratteln, Schweiz; Kontivac der Fa. Buss, Basel, Schweiz). Generell ist der Einsatz aller Apparate möglich, die die genannten Voraussetzungen erfüllen.

Die Menge des zugesetzten Lösungsmittels hängt innerhalb der angegebenen Grenzen von der Art der verwendeten Reaktionsapparatur, dem Acylierungsmittel und der Anthrachinonverbindung ab. Bevorzugt beträgt die Lösungsmittelmenge etwa 20 bis etwa 100 Gew.-%, besonders bevorzugt etwa 25 bis etwa 75 Gew.-%, bezogen auf den gebildeten Anthrachinonküpenfarbstoff. In Abhängigkeit von der Wahl der Reaktionspartner können auch höhere Lösungsmittelmengen eingesetzt werden. So ist mit bis zu 250 oder 300 Gew.-%, bezogen auf den gebildeten Anthrachinonküpenfarbstoff unter den sonstigen Bedingungen der Beispiele 1 und 5 noch keine Rührfähigkeit während der Reaktion in normalen Rührwerksbehältern gegeben. Die Lösungsmittelmenge beeinflusst die Geschwindigkeit der Umsetzung. Es ist überraschend, dass bei optimaler Abstimmung der Reaktionsbedingungen auf die jeweils eingesetzten Reaktionspartner, mit weniger als 100% Lösungsmittel bezogen auf gebildeten Farbstoff die Reaktionsbedingungen vergleichbar sind mit denen, die für die Herstellung der Farbstoffe in konventioneller Fahrweise, z.B. in Rührwerkskesseln, benötigt werden, obwohl in keiner Phase der Reaktion wesentliche Mengen der Komponenten in gelöster Form vorliegen, praktisch also unter den Bedingungen einer Backschmelze gearbeitet wird. Ebenso überraschend ist es, dass man eine vollständige Umsetzung der Acylfunktionen mit den Aminen erhält, ohne dazu Aminüberschüsse zu benötigen. Deshalb ist es möglich, in der Regel ohne nachgeschaltete Reinigungsoperationen zu brauchbaren Farbstoffen zu gelangen. Die zugesetzten Lösungsmittel besitzen neben einer begrenzten Funktion als Lösungsmittel vor allem die eines Schmiermittels und Wärmeüberträgers. Ganz ohne Lösungsmittel bekommt man keine vergleichbaren Umsetzungen, wie die Vergleichsbeispiele 1b, 1c und 8b zeigen.

Die Reihenfolge der Zugabe der Reaktionspartner ist variabel. So kann man z.B. bei Temperaturen unterhalb der Reaktionstemperatur eine Suspension oder Lösung der Acylierungsmittel im Lösungsmittel vorlegen und dazu die Anthrachinonverbindung geben oder man kann umgekehrt die Anthrachinonverbindung im Lösungsmittel vorlegen und das Acylierungsmittel als Pulver oder in gelöster Form zu dosieren.

Um die Vermischung der Komponenten zu verbessern, kann man auch Netzmittel üblicher Art, z.B. hochethoxylierte Fettalkohole (> 30 Ethoxygruppen), N-Methylfett-säureamide oder Schwefelsäureester höherer Fettalkohole vor oder während der Umsetzung zusetzen. Bezogen auf den gebildeten Farbstoff verwendet man vorzugsweise 0,1 bis 5 Gew.-%, besonders bevorzugt 0,5 bis 2 Gew.-% an Netzmittel.

Die Aufarbeitung der Reaktionsgemische kann nach an sich bekannten Verfahren erfolgen, z.B. durch Abdestillieren, vorzugsweise unter vermindertem Druck, durch Wasserdampfdestillation oder durch Lösungsmittelverdünnung und anschliessende Filtration oder Dekantation oder eine Kombination dieser Verfahrensweisen.

Aus wirtschaftlichen Gründen ist das Abdestillieren des Lösungsmittels die bevorzugte Methode. Da dabei – vor allem in Apparaten mit nur geringer Mahlwirkung wie etwa in einem Schaufeltrockner mit Schlagstangen – neben viel feinem Pulver auch Anteile grösserer Partikel auftreten können, ist es ratsam, vor dem Trocknen – vor allem bevor die letzte Reste des Lösungsmittels entfernt werden – ein Dispergiermittel zuzusetzen. Geeignete Dispergiermittel sind beispielsweise Alkalisalze von Naphthalin-, Alkylnaphthalin-, Lignin-, Ditolylethersulfonsäuren oder vorzugsweise deren Formaldehydkondensationsprodukten. Sie werden zu 1 bis 30 Gew.-%, vorzugsweise 5 bis 15 Gew.-%, bezogen auf die Menge des gebildeten Farbstoffs, während oder vorzugsweise nach der Umsetzung zugesetzt. Man erhält dann beim Trockendestillieren wesentlich weniger grobe Anteile, die zudem noch wesentlich poröser sind und bei Nachbehandlungen z.B. solchen oxidativer Art zur Beseitigung von Verunreinigungen z.B. im alkalischen Bereich mit Hypochlorit, im sauren Bereich mit Chromaten oder Persulfaten leicht zerfallen.

Die für eine Küpenfärbung erwünschte Feinverteilung des gebildeten Farbstoffs wird nach an sich bekannten Verfahren erzielt.

Gegenüber den bisher bekannten Verfahren zur Herstellung von Anthrachinonküpenfarbstoffen, bei denen die Umsetzung in Gegenwart eines Vielfachen an Lösungsmittel, bezogen auf den gebildeten Farbstoff, erfolgen muss, – es muss ja Rührfähigkeit in allen Reaktionsphasen gegeben sein – zeichnet sich das erfindungsgemässe Verfahren besonders im Bereich der bevorzugt einzusetzenden Lösungsmittelmenge durch besondere Wirtschaftlichkeit aus. Dies ist vor allem bedingt durch bessere Raum-Zeit-Ausbeuten, wesentlich geringeren Bedarf und geringere Verluste an Lösungsmitteln und die Tatsache, dass Reaktion und Aufarbeitung im selben Apparat erfolgen können. Die erhaltenen Farbstoffe sind den konventionell hergestellten qualitativ ebenbürtig oder überlegen.

Beispiel 1

a) In einem 25 l Schaufeltrockner mit Schlagstangen und indirekter 6 bar-Dampfheizung werden bei 50 bis 60°C 1,85 kg Cyanurchlorid zu 5 l Phenol gegeben, anschliessend bei gleicher Temperatur mit 6,5 kg 1-Aminoanthrachinon (98%ig) versetzt und in 1 Stunde auf 140 bis 145°C möglichst gleichmässig erwärmt und bei dieser Temperatur gehalten, bis in einer entnommenen Probe chromatographisch nur noch Spuren des Amins nachweisbar (ca. 2 Stunden erforderlich) sind. Ab 80°C beginnt dabei die HCl-Entwicklung, die ihr Maximum bei 110°C erreicht und bei weiterer Temperaturerhöhung wieder nachlässt. Gegen Ende ist sie nur noch sehr schwach. Die anfangs pastöse Masse verhärtet sich mit fortschreitender Reaktion zunehmend und nimmt zum Schluss wieder eine pastöste Form an. Nun destilliert man im Vakuum das Phenol weitgehend ab, dabei werden Salzsäurereste entfernt. Dann trägt man das jetzt pulvrige Produkt aus dem Schaufeltrockner aus. Erhalten werden 7,4 kg. Chlorgehalt 0,3%. Dieses Produkt färbt, in üblicher Weise in fein verteilte Form gebracht, Baumwolle aus 25°C warmer Küpe echt in kräftigem klarem gelben Ton an.

b) Arbeitet man wie unter a) beschrieben, setzt statt 5 l Phenol aber 5 l Aceton ein und destilliert nach inniger Vermischung der Reaktionspartner vor der Reaktion das Aceton unterhalb 50°C unter vermindertem Druck ab und erwärmt auf 140 bis 145°C, so setzt sich der grösste Teil des 1-Aminoanthrachinons nicht um und es wird nur eine geringe HCl-Entwicklung beobachtet. Daran ändert sich auch nichts, wenn die Reaktionszeit auf 10 Stunden verlängert wird oder die Temperatur auf 170 bis 180°C angehoben wird.

c) Man arbeitet wie in a) beschrieben, verzichtet aber auf Phenol und setzt das Cyanurchlorid und 1-Aminoanthrachinon als kaltgemahlenes Gemisch ein. Dieses Gemisch verhält sich ganz ähnlich wie unter b) beschrieben.

Beispiel 2

Man arbeitet wie in Beispiel 1 beschrieben, setzt aber statt 1-Aminoanthrachinon eine gleich grosse Gewichtsmenge 2-Aminoanthrachinon ein und arbeitet nach beendeter Reaktion wie folgt auf: Man spült das Reaktionsgemisch mit Wasser aus dem Schaufeltrockner in einen 100 l Kessel, destilliert mit Wasserdampf das Phenol weitgehend ab, stellt dann mit Soda auf pH 8 bis 9 und behandelt unter Rühren bei 90°C mit Chlorlauge während 2 Stunden; Chlorlaugenverbrauch ca. 25 l. Man nimmt überschüssige Chlorlauge mit der eben notwendigen Menge Bisulfit weg, filtriert heiss, wäscht neutral und trocknet. Erhalten werden 6,85 kg. Cl-Gehalt 0,4%. Das Produkt färbt in üblicher Weise in fein verteilte Form gebracht Baumwolle aus der Küpe in sehr klarem gelbem Ton; der Farbton ist grünstichiger als derjenige des nach Beispiel 1 erhaltenen Farbstoffs.

Beispiel 3

a) Man arbeitet wie in Beispiel 1, destilliert einen Teil des Phenols zusammen mit restlicher Salzsäure aus der Reaktion im Vakuum ab, setzt jetzt bezogen auf die zu erwartende Farbstoffausbeute 20% eines üblichen Dispergiermittels, z.B. eine 40%ige Lösung von ligninsulfonsaurem Na zu und destilliert zur Trockne. Das so erhaltene Produkt ist feinmehlig und enthält nur wenig aggregierte Partikel, die bei üblichen Formierungsmethoden leicht zerfallen.

b) Man arbeitet wie in Beispiel 1, setzt nach beendeter Reaktion soviel Sodalösung zu, bis sich in einer entnommenen und mit Wasser versetzten Probe ein pH von grösser 6 einstellt, destilliert im Wasserdampf das Phenol ab, setzt 10% eines Kondensationsmittels aus naphthalinsulfonsaurem Natrium und Formaldehyd zu und destilliert zur Trockne und rührt das Produkt als kornweiches goldgelbes Pulver aus.

Beispiel 4

In einem 20 l Discotherm der Fa. List (Pratteln, Schweiz) mit indirekter 6 bar Dampfheizung werden 6,7 kg rohes 1-Aminoanthrachinon folgender Zusammensetzung:

72,5% 1-Aminoanthrachinon
5,9% 2-Aminoanthrachinon
3,1% 1,5-Diaminoanthrachinon
3,0% 1,6-Diaminoanthrachinon
3,1% 1,7-Diaminoanthrachinon
2,8% 1,8-Diaminoanthrachinon
2,3% Anthrachinon,

erhalten nach Beispiel 1 der DE-OS 2 740 889, mit 3 l Phenol bei 60°C innig vermischt, anschliessend setzt man 1,85 kg Cyanurchlorid zu und vermischt eine weitere Stunde bei 60°C. Man erwärmt nun auf 110°C, hält 1 Stunde bei dieser Temperatur, erwärmt auf 140 bis 145°C und hält bei dieser Temperatur solange, bis die Salzsäureentwicklung fast ganz aufgehört hat und eine entnommene Probe nur noch spurenweise Aminanteile anzeigt (2 bis 3 Stunden erforderlich). Nun destilliert man im Vakuum das Phenol ab und rührt den Inhalt des Schaufeltrockners aus. Erhalten werden 7,5 kg. Dieses Produkt wird mit 25 l Wasser angeschlagen, mit Soda auf pH 9 gestellt und mit soviel Chlorlauge bei 85 bis 90°C behandelt, dass nach 3 Stunden Nitritpapier noch gebläut wird. Man filtriert ab und wäscht mit heissem Wasser neutral. Erhalten werden 9,8 kg Presskuchen mit 6,9 kg Farbstoffgehalt. Cl-Gehalt einer getrockneten Probe 0,3%. Durch Vermahlen mit 200% eines Naphthalinsulfonsäuregemisches (bezogen auf Farbstoffeinsatz) als 5 bis 10%ige Paste in einer Kugelmühle in feinverteilte Form gebracht, erhält man bei der Küpenfärbung von Baumwolle eine sehr kräftige Färbung, die im Ton etwas röter ist als die mit dem Farbstoff gemäss Beispiel 1 erhaltene.

Beispiel 5

In einem 50 l schnellaufenden Schaufeltrockner mit Messerköpfen gibt man zu einer Lösung von 3,84 kg Cyanurchlorid in 12,8 l Phenol bei 60°C eine Mischung aus 10,3 kg 1-Amino-5-benzoylaminoanthrachinon und 5,8 kg 1-Aminoanthrachinon, erwärmt innerhalb einer Stunde auf 110°C, hält bei dieser Temperatur 1 Stunde und erwärmt dann auf 145 bis 155°C und hält bei dieser Temperatur bis chromatographisch nur noch wenig Amine nachweisbar sind und destilliert im Vakuum das Phenol ab. Nach Ausrühren des Reaktors erhält man 18,4 kg eines Produktes, welches noch 0,6% Chlor enthält und in feinverteilte Form gebracht Baumwolle aus 55°C heisser Küpe in kräftigen goldorangefarbigen Tönen färbt.

Beispiel 6

a) In einer Zweiwellenschneckenmaschine mit einem Durchsatzvolumen von 5 l/h fördert man ein inniges Gemisch aus 52,5% 2-(3,4-Phthaloyl)-acridonyl-amino-(2)-4,6-dichlortriazin und 46,5% 1-Amino-anthrachinon und 1% eines Netzmittels vom Typ n-Methylfettsäureamid von 50 bis 60°C in eine nachgeschaltete Zweiwellenschneckenmaschine mit einem Durchsatzvolumen von ca. 8 kg/h und dosiert beim Übergang in die zweite Maschine pro Stunde kontinuierlich und möglichst gleichmässig 3,2 kg Phenol zu. Innerhalb dieser Schnecke, bei einer mittleren Verweilzeit von 2 Stunden, steigt die Temperatur stufenweise von 60°C (Eingang) bis 160°C (Ausgang) an. In einem angeschlossenen Vakuumkontakttrockner befreit man anschliessend das Produkt vom Phenol. Erhalten werden pro Stunde etwa 4 bis 4,3 kg 2-(3,4-Phthaloyl)-acridonyl-amino-(2)-4,6-diantrachinonylamino-1-triazin. Dieses Produkt färbt in feinverteilte Form gebracht Baumwolle aus 55 bis 65°C heisser Küpe echt in kräftigen olivgrünen Tönen.

b) Das in a) eingesetzte 2-(3,4-Phthaloyl)-acridonyl-amino-(2)-4,6-dichloranthrachinon wurde durch Umsetzung von 1 Mol Cyanurchlorid mit 1 Mol 2-Amino-3,4-phthaloylacridon in der 10-fachen Menge Nitrobenzol bei 200 bis 210°C erhalten und durch Vakuumtrocknung unterhalb 140°C vom Nitrobenzol befreit. Cl-Gehalt 14,3%.

Beispiel 7

a) In einem 12 l AP-Reaktor (Fa. List, Schweiz) wird ein auf ca. 60°C vorgeheiztes inniges Gemisch aus 2,2 kg 2-Amino-3,4-phthaloyl-7-bromacridon, 0,85 kg 1-Aminoanthrachinon, 1,3 kg 1-Amino-4-benzoyl-aminoanthrachinon und 0,89 kg Cyanurchlorid mit 2,2 kg Phenol versetzt und allmählich auf 140 bis 150°C erwärmt und bei dieser Temperatur solange gehalten (ca. 3 bis 4 Stunden erforderlich) bis in einer Probe chromatographisch nur noch geringe Mengen der Amine nachweisbar sind. Nun wird das Phenol mit Wasserdampf abgetrieben, die Suspension mit 2,2 l 40%iger Lösung eines Gemisches von Naphthalinsulfonsäuren als Na-Salze versetzt und im Vakuum zur Trockne destilliert. Erhalten werden 5,82 kg eines Produktes, welches Baumwolle aus 55 bis 65°C als Küpe in grauen Tönen färbt.

b) Man arbeitet wie im Beispiel 7, ersetzt das 1-Aminoanthrachinon aber durch eine gleich grosse Gewichtsmenge eines Amingemisches folgender Zusammensetzung:

| | |
|---|---|
| 1-Aminoanthrachinon | 40,1% |
| 2-Aminoanthrachinon | 22,5% |
| 1,5-Diaminoanthrachinon | 2,8% |
| 1,8-Diaminoanthrachinon | 5,6% |
| 1,6-Diaminoanthrachinon | 3,6% |
| 1,7-Diaminoanthrachinon | 3,9% |
| Anthrachinon | 12,4% |

Rest auf 100% unbekannt

das durch NaSH-Reduktion aus den Abfallprodukten der Herstellung von reinem 1-Nitroanthrachinon erhalten werden kann. Erhalten werden 5,49 kg eines Produktes, welches Baumwolle in ähnlichem Ton färbt wie das nach a) erhaltene Produkt.

Beispiel 8

a) In ein Bad mit Dimethylformamid wird ein ca. 50 ml fassendes dickwandiges Reagenzglas so eingepasst, dass seine Aussenwände überall vom Lösungsmittel umspült werden. In das Glas gibt man eine Anschlämmung von 4,5 g 2-Phenyl-4,6-dichlortriazin und 8,5 g 1-Aminoanthrachinon in 20 ml Aceton und 4 g Nitrobenzol und erwärmt das Dimethylformamid langsam bis zur Siedetemperatur. Dabei dampft das Aceton ab und es hinterbleibt ein inniges Gemisch der restlichen Komponenten. Ab 100°C setzt lebhafte Salzsäureentwicklung ein. Man belässt die Mischung solange in dem schwach siedenden Bad aus Dimethylformamid bis die Salzsäureentwicklung praktisch aufgehört hat. Man gibt soviel Methanol noch in der Wärme zu, bis sich die Masse mit einem Glasstab anrühren lässt. Man saugt noch warm über eine Nutsche ab, wäscht mit etwas Ethanol und trocknet. Erhalten werden 9,6 g Farbstoff mit einem Chlorgehalt von 0,4% der in feinverteilte Form gebracht Baumwolle in kräftigem neutral gelbem Ton färbt.

b) Man arbeitet wie in a) und lässt lediglich das Nitrobenzol weg. Man bekommt nur sehr geringe HCl-Entwicklung und selbst nach 10 Stunden hat sich nur wenig 1-Aminoanthrachinon umgesetzt. Auch nach Temperaturerhöhung auf 180°C, Austausch des Heizmittels Dimethylformamid gegen Phenol, ändert sich dies nicht wesentlich. Setzt man jetzt aber 2 g Nitrobenzol zu, so kommt rasch stärkere Salzsäureentwicklung in Gang und bereits nach 2 Stunden lassen sich nach Extrahieren mit Pyridin über 60% der Theorie an sauberem 2-Phenyl-4,6-trichlortriazin isolieren.

Beispiel 9

In einem 50 l Schaufeltrockner mit schnellaufendem Messerkopf werden 20,1 kg 1-Amino-5-benzoyl-aminoanthrachinon mit einer Lösung von 15,3 kg einer 40%igen Lösung von Isophthalsäuredichlorid in Nitrobenzol bei Raumtemperatur versetzt und innerhalb 1,5 Stunden auf 140 bis 150°C geheizt. Die anfängliche pastöse Konsistenz wird schmierig-krümelig. Man hält 4 bis 5 Stunden bei dieser Temperatur, destilliert anschliessend das Nitrobenzol im Vakuum bei maximal 140°C ab, rührt aus und befreit im Vakuumschrank von den letzten Nitrobenzolresten. Erhalten werden 24,6 kg eines Farbstoffs, der nur noch Spuren Chlor und wenig 1-Amino-5-benzoylaminoanthrachinon enthält und Baumwolle aus 55°C heisser Küpe in kräftig gelbem Ton färbt. Durch Anschlagen in Wasser wird eine ca. 50%ige Paste hergestellt, die in einer Rotor-Stator-Kolloidmühle gemahlen wird. Anschliessend wird in einem Kessel mit der gleichen Menge Wasser verdünnt und mit Chlorlauge bei pH 8 bis 9 behandelt. Nach Absaugen, Waschen und Vermahlen mit Dispergiermittel wird in der Küpenfärbung ein noch etwas klarerer Farbton erhalten.

**Patentansprüche**

1. Verfahren zur Herstellung von Anthrachinonküpenfarbstoffen, dadurch gekennzeichnet, dass man gegebenenfalls substituierte Aminoanthrachinone oder davon abgeleitete aminogruppenhaltige Verbindungen mit Acylierungsmitteln, die eine oder mehrere acylierende Gruppen enthalten in Gegenwart von 10 Gew.-%, bezogen auf den gebildeten Anthrachinonküpenfarbstoff bis zu einer solchen Menge eines oder mehrerer oberhalb 100°C siedender Lösungsmittel, dass das Gemisch in üblichen Rührapparaturen noch nicht rührbar wird oder während der Reaktion nicht rührbar bleibt, bei erhöhter Temperatur umsetzt.

2. Verfahren gemäss Anspruch 1, dadurch gekennzeichnet, dass man in Gegenwart von 10 bis zu etwa 100 Gew.-%, vorzugsweise in Gegenwart von etwa 25 bis etwa 75 Gew.-%, bezogen auf den gebildeten Anthrachinonküpenfarbstoff, eines oder mehrerer der Lösungsmittel bei erhöhter Temperatur umsetzt.

3. Verfahren gemäss Anspruch 1, dadurch gekennzeichnet, dass man die Umsetzung in Apparaturen mit grossen spezifischen Heizflächen und intensiver Misch- und/oder Knetbewegung durchführt.

4. Verfahren gemäss den Ansprüchen 1 bis 3, dadurch gekennzeichnet, dass man als Reaktionsapparaturen Schaufeltrockner, Zwei- und Mehrwellenschneckenmaschinen und Allphasentrocknerreaktoren verwendet.

5. Verfahren gemäss den Ansprüchen 1 bis 4, dadurch gekennzeichnet, dass man als Aminoanthrachinonverbindung gegebenenfalls substituierte 1- und 2-Aminoanthrachinone oder Aminoanthrachinone, an die ein carbo- oder heterocyclischer Ring anelliert sein kann, wobei dieser Ring substituiert sein kann, einsetzt.

6. Verfahren gemäss den Ansprüchen 1 bis 5, dadurch gekennzeichnet, dass man als Acylierungsmittel polyfunktionelle Carbonsäurehalogenide oder heterocyclische Verbindungen mit aktivierten Halogenatomen nichtanthrachinoider Art einsetzt.

7. Verfahren gemäss den Ansprüchen 1 bis 6, dadurch gekennzeichnet, dass man als Acylierungsmittel Cyanurchlorid oder ein anderes in 2-Stellung oder 2,4-Stellung substituiertes 4,6-Dichlor- oder 6-Monochlortriazin-1,3,5 einsetzt und der entstehende Farbstoff mindestens 2 anthrachinoide Gruppen enthält.

8. Verfahren gemäss den Ansprüchen 1 bis 7, dadurch gekennzeichnet, dass man ein oder mehrere über 120°C siedende Lösungsmittel einsetzt.

9. Verfahren gemäss den Ansprüchen 1 bis 8, dadurch gekennzeichnet, dass man als Lösungsmittel Phenol oder Nitrobenzol verwendet.

10. Verfahren gemäss den Ansprüchen 1 bis 9, dadurch gekennzeichnet, dass man als Acylierungsmittel Cyanurchlorid, als Amino-anthrachinon 1-Amino-anthrachinon und als Lösungsmittel Phenol einsetzt.

**Claims**

1. Process for the preparation of anthraquinone vat dyestuffs, characterised in that optionally substituted aminoanthraquinones or amino group-containing compounds derived therefrom are reacted with acylating agents, which contain one or more acylating groups, at an elevated temperature in the presence of 10% by weight, relative to the anthraquinone vat dyestuff formed, up to such an amount of one or more solvents boiling above 100°C that the mixture, in customary stirring apparatuses, does not yet become stirrable or, during the reaction, does not remain stirrable.

2. Process according to Claim 1, characterised in that the reaction is carried out at an elevated temperature in the presence of 10 to about 100% by weight, preferably in the presence of about 25 to about 75% by weight, relative to the anthraquinone vat dyestuff formed, of one or more of the solvents.

3. Process according to Claim 1, characterised in that the reaction is carried out in apparatuses having large specific heating surfaces and a vigorous mixing and/or kneading action.

4. Process according to Claims 1 to 3, characterised in that paddle dryers, twin-shaft and multi-shaft screw machines and all-phase drying reactors are used as reaction apparatuses.

5. Process according to Claims 1 to 4, characterised in that optionally substituted 1- and 2-aminoanthraquinones or aminoanthraquinones onto which a carbocyclic or heterocyclic ring can be fused, it being possible for this ring to be substituted, are used as the aminoanthraquinone compound.

6. Process according to Claims 1 to 5, characterised in that polyfunctional carboxylic acid halides or heterocyclic compounds of a non-anthraquinonoid type having activated halogen atoms are used as the acylating agent.

7. Process according to Claims 1 to 6, characterised in that cyanuric chloride or another 4,6-dichloro- or 6-monochloro-1,3,5-triazine which is substituted in the 2-position or 2,4-position is used as the acylating agent and the resulting dyestuff contains at least 2 anthraquinonoid groups.

8. Process according to Claims 1 to 7, characterised in that one or more solvents which boil above 120°C are used.

9. Process according to Claims 1 to 8, characterised in that phenol or nitrobenzene are used as the solvent.

10. Process according to Claims 1 to 9, characterised in that cyanuric chloride is used as the acylating agent, 1-aminoanthraquinone is used as the aminoanthraquinone and phenol is used as the solvent.

## Revendications

1. Procédé de production de colorants anthraquinoniques pour cuve, caractérisé en ce qu'on fait réagir à température élevée des aminoanthraquinones éventuellement substituées ou des composés porteurs de groupes amino qui en dérivent, avec des agents acylants qui contiennent un ou plusieurs groupes acylants, en présence de 10% en poids, par rapport au colorant anthraquinonique pour cuve formé et jusqu'à une quantité telle d'un ou plusieurs solvants bouillant au-dessus de 100°C, que le mélange se trouvant dans des appareils agitateurs classiques ne puisse pas encore être agité ou ne reste pas capable d'être agité pendant la réaction.

2. Procédé suivant la revendication 1, caractérisé en ce qu'on conduit la réaction à température élevée en présence de 10 à environ 100% en poids, de préférence en présence d'environ 25 à environ 75% en poids, par rapport au colorant anthraquinonique pour cuve formé, d'un ou plusieurs des solvants.

3. Procédé suivant la revendication 1, caractérisé en ce qu'on conduit la réaction dans des appareils présentant de grandes surfaces spécifiques de chauffage et à mouvement de mélange et/ou de malaxage intensif.

4. Procédé suivant les revendications 1 à 3, caractérisé en ce qu'on utilise comme appareils de réaction des appareils de séchage à ailettes, des comme solvant, le phénol.
machines à deux ou plus de deux vis sans fin et des réacteurs de séchage de toutes phases.

5. Procédé suivant les revendications 1 à 4, caractérisé en ce qu'on utilise comme composé amino-anthraquinonique des 1- et 2-aminoanthraquinones ou des aminoanthraquinones éventuellement substituées, sur lesquelles un noyau carbocyclique ou hétérocyclique peut être condensé, ce noyau pouvant être substitué.

6. Procédé suivant les revendications 1 à 5, caractérisé en ce qu'on utilise comme agents acylants des halogénures d'acides carboxyliques polyfonctionnels ou des composés hétérocycliques à atomes activés d'halogènes de nature non anthraquinonique.

7. Procédé suivant les revendications 1 à 6, caractérisé en ce qu'on utilise comme agents acylants le chlorure de cyanuryle ou une autre 4,6-dichloro- ou 6-mono-chlorotriazine-1,3,5 substituée en position 2 ou en position 2,4 et le colorant formé porte au moins deux groupes anthraquinoniques.

8. Procédé suivant les revendications 1 à 7, caractérisé en ce qu'on utilise un ou plusieurs solvants bouillant au-dessus de 120°C.

9. Procédé suivant les revendications 1 à 8, caractérisé en ce qu'on utilise comme solvant le phénol ou le nitrobenzène.

10. Procédé suivant les revendications 1 à 9, caractérisé en ce qu'on utilise comme agent acylant le chlorure de cyanuryle, comme amino-anthraquinone la 1-amino-anthraquinone et comme solvant, le phénol.